(19) **Europäisches Patentamt / European Patent Office / Office européen des brevets**

(11) **EP 0 932 964 B1**

(12) **FASCICULE DE BREVET EUROPEEN**

(45) Date de publication et mention de la délivrance du brevet:
**26.09.2007 Bulletin 2007/39**

(21) Numéro de dépôt: **98939720.3**

(22) Date de dépôt: **20.07.1998**

(51) Int Cl.:
*H04L 25/03* (2006.01)    *G10L 21/02* (2006.01)

(86) Numéro de dépôt international:
**PCT/FR1998/001588**

(87) Numéro de publication internationale:
**WO 1999/005831 (04.02.1999 Gazette 1999/05)**

(54) **PROCEDE ET DISPOSITIF D'EGALISATION AVEUGLE DES EFFETS D'UN CANAL DE TRANSMISSION SUR UN SIGNAL DE PAROLE NUMERIQUE**

VERFAHREN UND VORRICHTUNG ZUM BLINDEN AUSGLEICH VON ÜBERTRAGUNGSKANALEFFEKTEN AUF EIN DIGITALES SPRACHSIGNAL

METHOD AND DEVICE FOR BLIND EQUALIZING OF TRANSMISSION CHANNEL EFFECTS ON A DIGITAL SPEECH SIGNAL

(84) Etats contractants désignés:
**CH DE ES GB IT LI NL**

(30) Priorité: **22.07.1997  FR 9709273**

(43) Date de publication de la demande:
**04.08.1999  Bulletin 1999/31**

(73) Titulaire: **FRANCE TELECOM**
**75015 Paris (FR)**

(72) Inventeurs:
• **MAUUARY, Laurent**
  **F-22700 Louannec (FR)**
• **MONNE, Jean**
  **F-22700 Perros Guirec (FR)**

(74) Mandataire: **Fréchède, Michel**
**Cabinet Plasseraud**
**52 rue de la Victoire**
**75440 Paris Cedex 09 (FR)**

(56) Documents cités:
**EP-A- 0 692 883        EP-A- 0 720 149**
**EP-A- 0 780 828        US-A- 5 097 509**

• **MOKBEL C ET AL: "Deconvolution of telephone line effects for speech recognition" SPEECH COMMUNICATION, vol. 3, no. 19, septembre 1996, page 185-196 XP004013650 cité dans la demande**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

L'invention concerne un procédé et un dispositif d'égalisation aveugle, les effets d'un canal de transmission sur un signal de parole numérique.

La transmission fidèle d'un signal de parole est, à l'heure actuelle, un objectif majeur en vue, notamment, de l'amélioration des performances des systèmes de reconnaissance automatique de la parole, systèmes RAP, qui fonctionnent par l'intermédiaire du réseau téléphonique commuté ou du réseau de radiotéléphonie mobile, GSM.

La difficulté principale qui s'oppose à l'obtention d'un taux de reconnaissance satisfaisant et sensiblement constant est due aux variabilités qui existent dans le signal acoustique véhiculant la parole.

Les sources de variabilité sont nombreuses et l'on distingue, habituellement, deux classes de variabilité, la variabilité intrinsèque et la variabilité extrinsèque au locuteur. En effet, les créations acoustiques d'un même mot diffèrent selon l'état du locuteur, le contexte du mot dans la phrase, par exemple. Cette différence apparaît plus importante si l'on procède en outre à une comparaison des créations acoustiques en provenance de plusieurs locuteurs. Les créations acoustiques des mots sont, en fait, des ondes acoustiques, lesquelles doivent être captées pour être soumises à un processus de reconnaissance. Lors de l'acquisition d'une onde acoustique, onde de parole, diverses perturbations viennent s'ajouter à celle-ci, ce qui a pour effet d'augmenter la variabilité du signal capté. Le bruit ambiant est, en outre, constitutif d'une onde acoustique captée par le microphone et ainsi mélangée additivement à l'onde de parole. Le signal électronique délivré par le microphone est un signal somme des signaux correspondant à la parole et au bruit ambiant.

Par ailleurs, en particulier pour des applications mettant en oeuvre le réseau téléphonique, le module d'acquisition formé par le microphone du combiné et par les lignes téléphoniques, reliant l'utilisateur au système de reconnaissance de la parole, agit comme un filtre de convolution linéaire, variant lentement dans le temps.

Pour un combiné classique, ne fonctionnant pas en mode mains libres, les effets du bruit ambiant sont en général négligeables et ce sont essentiellement les effets convolutifs des lignes de transmission qui doivent être pris en considération. Ainsi, chaque signal observé à l'entrée du système de reconnaissance automatique de la parole contient une composante convolutive presque constante pour un appel donné mais variant d'un appel à l'autre.

Cette composante convolutive est nuisible à l'efficacité de la reconnaissance de la parole. Afin de bien caractériser son effet, il est indispensable de projeter cette composante dans l'espace de représentation dans lequel la reconnaissance est effectuée, à savoir l'espace cepstral dans la majorité des systèmes de reconnaissance.

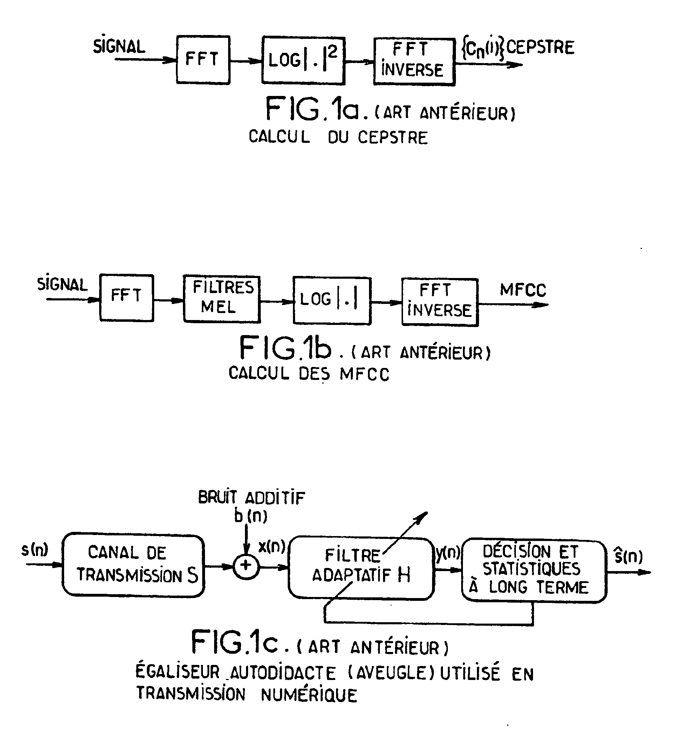

A titre d'exemple illustratif, on rappelle ici, en liaison avec la figure la relativement à la représentation cepstrale, qu'en amont d'un système RAP, un module de paramétrisation transforme le signal de parole numérisé en une suite de vecteurs de paramètres, calculés sur des fenêtres de longueur fixe, de 10 à 40 ms, et qui se recouvrent. En principe, le recouvrement est de l'ordre de 50%. Ces vecteurs de paramètres sont choisis pour représenter l'information la plus pertinente possible dans la fenêtre du signal. Ainsi qu'illustré en figure 1a, relative au principe général de calcul du cepstre, une transformée fréquentielle, FFT, calcule le spectre de la fenêtre du signal. Le logarithme de l'énergie spectrale est ensuite calculé. A partir de ce logarithme, le cepstre $\{C_n(i)\}$ est obtenu par FFT inverse. Généralement, on ne prend en considération que la première dizaine de coefficients cepstraux. Ces coefficients retenus sont ainsi supposés modéliser la réponse impulsionnelle du conduit vocal et, ainsi, porter l'information pertinente pour le processus de reconnaissance. En outre, ces coefficients sont insensibles à l'énergie du signal d'entrée, caractéristique majeure dans le cadre de la reconnaissance automatique de la parole.

D'autres représentations du même type ont été utilisées, en particulier dans le but spécifique de la reconnaissance de la parole. C'est le cas du système RAP développé en France par le Centre National d'Etudes des Télécommunications de FRANCE TELECOM, système PHIL90, lequel met en oeuvre comme vecteurs de paramètres des MFCC, pour "*Mel Frequency based Cepstral Coefficients*". Ces derniers mettent en oeuvre un lissage du spectre $\{S_n(f)\}$ pour l'estimation de l'enveloppe spectrale et des connaissances psychoacoustiques. Le lissage spectral est effectué au moyen d'un banc de filtres. Le système auditif humain analysant les basses fréquences avec une résolution plus élevée que les autres fréquences, alors qu'en outre, dans un signal de parole, les basses fréquences sont plus riches en information que les hautes fréquences, les bandes critiques du banc de filtres sont réparties sur une échelle perceptive non linéaire appelée MEL ou BARK. Le principe de calcul des MFCC, en référence à la figure 1b, consiste, après transformation fréquentielle de la fenêtre du signal, FTT, puis filtrage MEL, à calculer pour chaque fenêtre du signal un vecteur formé des énergies dans chacune des bandes de fréquences. La transformation fréquentielle inverse, FTT inverse, réalisée par une transformation inverse, délivre les coefficients MFCC.

Dans l'espace correspondant à ces types de représentation, un filtre convolutif, qui représente le canal de transmission, est transformé en un biais additif, presque constant, lequel est contenu dans les vecteurs cepstraux. Pour une étude plus détaillée de ces représentations, on pourra utilement se reporter aux articles ci-après, publiés par :

- H.HERMANSKY, N.MORGAN, A.BAYYA, P.KOHN"Compensation for the Effect of the Communication Channel in Auditory-like Analysis of Speech", (RASTA-PLP), Eurospeech, pp. 1367-1370, Genova 1991 ;
- C.MOKBEL, D.JOUVET, J.MONNE"Deconvolution of Telephone Line Effects for Speech Recognition", Speech Communication, Vol.19, n˚3, Septembre 1996, pp. 185-196.

Le biais ainsi introduit change d'un appel à l'autre. Du fait de cette transformation et de cette représentation, les vecteurs cepstraux, correspondant à un son déterminé, occupent ainsi une partie élargie, du fait de la présence du biais, dans l'espace de représentation. L'existence de ce biais a ainsi pour effet de diminuer la capacité de discrimination entre vecteurs cepstraux correspondant à des sons différents et implique, pour cette raison, la mise en oeuvre de modèles plus complexes afin de procéder à la discrimination entre les différentes formes du vocabulaire de l'application.

En conséquence, pour réduire au maximum les effets des lignes téléphoniques sur un signal observé, en vue d'un processus de RAP par exemple, le problème posé l'est essentiellement en terme de déconvolution aveugle de deux signaux, car un seul capteur, terminal, est disponible. Toutefois, le signal de parole d'origine et la fonction de transfert du canal occupent les mêmes zones de fréquences et ont, de fait, une grande partie en commun dans l'espace cepstral. Il est donc particulièrement délicat de définir des liftres, les liftres étant définis, par convention, comme des modules d'atténuation ou filtres dans le domaine cepstral, afin de réduire ou supprimer la contribution de la fonction de transfert du canal, et, par là, réaliser la déconvolution recherchée.

Les techniques actuelles mises en oeuvre ont pour objet, d'une part, dans le domaine de la reconnaissance automatique de la parole, la robustesse du processus de reconnaissance aux conditions d'acquisition du signal téléphonique, et, d'autre part, dans le domaine de traitement de signal, la réduction des perturbations dans un signal téléphonique afin d'en améliorer l'intelligibilité.

Lorsque le processus de reconnaissance est appliqué localement pour la commande vocale des téléphones mains-libres, des ordinateurs, des terminaux d'information ou autres, les efforts en vue de réduire les perturbations dans le signal se concentrent sur la réduction des perturbations introduites par le bruit additif. Dans le cadre précité, les techniques usuelles couvrent la définition des représentations robustes, le filtrage tel que la soustraction spectrale, le filtrage d'antenne, le filtrage par état des modèles de Markov, ou même l'ajout en ligne du bruit ambiant sur le signal ou les modèles de référence.

Dans le cadre d'un processus de reconnaissance centralisé, les efforts engagés concernent également la réduction des effets des communications téléphoniques. La technique utilisée, de manière générale, est la soustraction, aux vecteurs cepstraux, de leur composante continue estimée sur un horizon suffisamment large. On indique que la notion d'horizon désigne, pour un signal téléphonique numérique subdivisé, en fenêtres, un nombre entier de fenêtres successives. Cette soustraction peut être effectuée, soit de manière explicite, estimation de la moyenne et soustraction de celle-ci, soit de manière implicite, par filtrage passe-haut. Des travaux récents ont montré que la moyenne des vecteurs cepstraux sur un horizon suffisamment large représente exactement les effets des lignes téléphoniques. Confer article de C.MOKBEL, J.MONNE et D.JOUVET précédemment cité.

Dans le cadre général de la déconvolution de signaux, on distingue deux grandes classes de processus de déconvolution.

La première classe, désignée par déconvolution aveugle, est basée sur les propriétés spectrales, cepstrales ou encore temporelles des signaux pour définir des schémas de déconvolution. Dans le domaine des télécommunications, les algorithmes d'égalisation adaptative s'apparentent à la déconvolution aveugle. Pour une description plus détaillée de ce type d'algorithme, on pourra se reporter à l'article publié par A.BENVENISTE et M.GOURSAT, "Blind Equalizers", IEEE Transactions on Communications, Vol. COM-32, n˚8, August 1984, pp. 871-883, 1984.

La deuxième classe, de manière semblable au processus mis en oeuvre par les algorithmes d'annulation d'écho ou de déréverbération, utilise le filtrage adaptatif, ou le filtrage spatial dans le cas d'une antenne acoustique. Dans un tel cas, on dispose en général de plusieurs capteurs, au minimum deux, l'un étant utilisé pour le signal de référence et l'autre pour le signal d'entrée. Pour une description plus détaillée de ce type de filtrage adaptatif, on pourra se reporter à l'article publié par B. WIDROW & al., "Adaptive Noise Cancelling : Principles and Applications", Proc. of IEEE, vol.63, n˚12, pp. 1692-1716, Dec.1975.

Dans le cadre plus particulier de la transmission de signaux numériques, les problèmes posés par les processus d'égalisation sont de même nature, en raison du fait qu'il est difficile d'obtenir un signal de référence propre en vue de mettre en oeuvre un schéma classique de filtrage pour annuler l'effet du canal de transmission. En effet, l'unique signal dont on dispose est le signal numérique observé et déjà transmis. Afin de simplifier le processus d'égalisation, des séquences numériques connues du récepteur peuvent être émises vers ce dernier, afin d'identifier la fonction de transfert du canal. Toutefois, un tel mode opératoire a pour effet de saturer rapidement la capacité de transmission du canal.

Dans le but de remédier à cet inconvénient, différents travaux visant à établir un processus d'égalisation aveugle ont été réalisés. Ce processus d'égalisation aveugle utilise une logique de décision et des statistiques à long terme connues, sur le signal numérique transmis, afin de calculer l'erreur servant à la mise à jour des coefficients d'un filtre par descente de gradient stochastique. Le schéma général d'un tel processus est représenté en figure 1c. Pour une description plus détaillée de ce type de processus, on pourra, par exemple, se reporter à l'article publié par J.J.SHYNK, "Frequency-Domain and Multiratet Adaptive Filtering", IEEE Signal Processing Magazine, pp.15-37, Jan. 1992.

En outre, un procédé et un système de filtrage adaptatif par égalisation aveugle d'un signal téléphonique numérique ont fait l'objet de la demande de brevet français n°94 08741 déposée le 13 juillet 1994, au nom de France TELECOM.

Dans le procédé et le système précités, le signal numérique est soumis à une transformation fréquentielle, FFT, et à un filtrage en sous-bandes. Chaque signal en sous-bandes est soumis à un filtrage adaptatif à partir d'un signal de référence basé sur des statistiques à long terme sur le signal téléphonique. Une égalisation par déconvolution aveugle des effets de la ligne téléphonique numérique et ainsi effectuée.

Un tel mode opératoire, basé essentiellement sur un processus d'égalisation aveugle dans le domaine fréquentiel, et donc spectral, justifié toutefois par les propriétés statistiques à long terme du signal transitant sur la ligne téléphonique, donne satisfaction.

Enfin, la demande de brevet EP 0720149 décrit un processus de reconnaissance de la parole dans lequel des coefficients cepstraux et un vecteur d'égalisation correspondant à une estimée grossière du biais des échantillons de parole les plus récents sont calculés. Ce vecteur d'égalisation doit donc être réactualisé pour assurer une soustraction efficace du biais.

La présente invention a toutefois pour objet la mise en oeuvre d'un processus d'égalisation aveugle par filtrage adaptatif directement appliqué au domaine cepstral.

Un autre objet de la présente invention, en raison même de cette application directe au domaine cepstral, est également une réduction du coût global de calcul.

Un autre objet de la présente invention est également une réduction du nombre de soties du filtre mis en oeuvre.

Un autre objet de la présente invention, en raison même de cette application directe au domaine cepstral, est la mise en oeuvre d'une meilleure adéquation des processus de traitement à la reconnaissance de la parole, notamment au système PHIL90.

Un autre objet de la présente invention est, enfin, la mise en oeuvre d'un processus de traitement permettant, dans certaines situations spécifiques, une amélioration des taux de reconnaissance comparés à ceux obtenus grâce à une égalisation aveugle dans le domaine spectral de la technique antérieure.

Le procédé et le dispositif, objets de la présente invention, sont remarquables en ce que le signal de parole $s_n(t)$ est transformé en vecteurs cepstraux. Chaque vecteur cepstral est soumis à un filtrage adaptatif à partir d'un cepstre de référence, représentatif du cepstre à long terme du signal de parole, pour engendrer des vecteurs cepstraux égalisés représentatifs du signal de parole égalisé.

Le procédé et le dispositif d'égalisation aveugle des effets d'un canal de transmission sur un signal numérique, objets de la présente invention, seront mieux compris à la lecture de la description et à l'observation des dessins ci-après, dans lesquels, outre les figures 1a à 1c relatives à l'art antérieur :

- la figure 2a représente, sous forme de schémas blocs, un organigramme général du procédé objet de la présente invention ;
- la figure 2b représente, sous forme de schémas blocs, un détail de mise en oeuvre du procédé, objet de l'invention, tel que représenté en figure 2a ;
- la figure 3a représente, sous forme de schéma fonctionnel, un dispositif d'égalisation aveugle des effets d'un canal de transmission sur un signal de parole numérique, objet de la présente invention ;
- les figures 3b et 3c représentent un mode de réalisation particulier du dispositif, objet de l'invention, représenté en figure 3a.

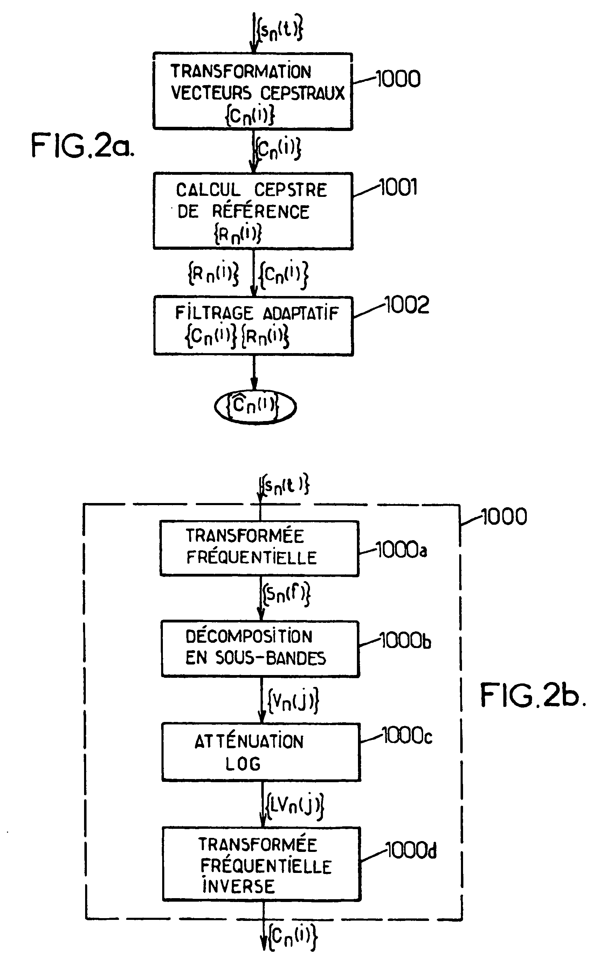

Une description plus détaillée du procédé d'égalisation aveugle des effets d'un canal de transmission sur un signal de parole numérique, conforme à l'objet de la présente invention, sera maintenant donnée en liaison avec la figure 2a et la figure 2b.

Sur la figure 2a précitée, le signal de parole numérique est noté $\{s_n(t)\}$, ce signal étant réputé transiter sur le canal de transmission pour lequel l'égalisation aveugle, conformément au procédé objet de la présente invention, doit être mise en oeuvre.

D'une manière générale, le signal de parole numérique est, de manière classique, subdivisé en blocs successifs se recouvrant éventuellement, n désignant le rang du bloc courant et par extension le rang de tout ensemble de données, ou trame, obtenues grâce à la mise en oeuvre du procédé, objet de la présente invention, à partir de ce bloc courant.

Conformément à la figure précitée, le procédé consiste au moins à soumettre le signal de parole numérique $\{s_n(t)\}$ à une transformation en un ensemble de vecteurs cepstraux, le vecteur associé à la trame de rang n étant noté $\{C_n(i)\}$, $C_n(i)$ désignant la composante, ou coefficient cepstral, de rang i de chaque vecteur cepstral, cette transformation étant effectuée en une étape notée 1000 sur la figure précitée. L'ensemble des vecteurs cepstraux est représentatif du signal de parole numérique $\{s_n(t)\}$ sur un horizon déterminé, la notion d'horizon étant définie conformément à la définition donnée préalablement dans la description.

L'étape 1000 précitée, à la suite de laquelle les vecteurs cepstraux $\{C_n(i)\}$ sont disponibles, est suivie d'une étape notée 1001, laquelle consiste à calculer un cepstre de référence, noté $\{R_n(i)\}$, ce cepstre étant représentatif pour chacun des vecteurs cepstraux $\{C_n(i)\}$ de l'ensemble des vecteurs cepstraux du cepstre à long terme de ce signal de parole.

On indique en effet qu'il est établi, en référence à la publication de C. MOKBEL, D. JOUVET et J.MONNE précédemment mentionnée dans la description, que le cepstre à long terme du signal de parole est presque constant sur toutes les quéfrences, la notion de quéfrence étant, dans le domaine cepstral, l'analogue de la notion de fréquence dans le domaine spectral. En outre, et en référence à la publication précédemment mentionnée, la moyenne des logarithmes des densités spectrales, et donc aussi la moyenne des coefficients cepstraux, sur un horizon suffisamment large, représente une composante convolutive constante dans le signal observé, laquelle peut être valablement assimilée à l'effet du canal de transmission.

En conséquence, l'étape 1001 précitée est suivie d'une étape 1002 consistant à soumettre chacun des vecteurs cepstraux $\{C_n(i)\}$ à un filtrage adaptatif à partir du cepstre de référence $\{R_n(i)\}$ pour engendrer un ensemble de vecteurs cepstraux égalisés, notés $\{\hat{C}_n(i)\}$, dans lesquels l'effet du canal de transmission est sensiblement supprimé. Cet ensemble de vecteurs cepstraux égalisés est représentatif d'un signal de parole numérique égalisé.

Ainsi, conformément au procédé, objet de la présente invention, le filtrage adaptatif réalisé à l'étape 1002 est conduit à partir de l'entrée de référence constituée par le cepstre de référence $\{R_n(i)\}$, le filtrage adaptatif étant bien entendu implanté dans le domaine cepstral et appliqué sur les coefficients cepstraux $C_n(i)$.

En ce qui concerne la mise en oeuvre du filtrage adaptatif précité, on indique que ce filtrage peut être un filtrage adaptatif de type LMS, pour *Least Mean Square,* ce type de filtrage ayant été décrit dans la publication précédemment citée, publiée par J.J.SCHINK.

Toutefois, conformément à un aspect particulièrement avantageux du procédé, objet de la présente invention, le filtrage adaptatif précité est appliqué dans le domaine cepstral et non dans le domaine spectral, ainsi que réalisé dans la technique antérieure.

En conséquence, et conformément à un aspect particulièrement avantageux du procédé, objet de la présente invention :

- L'égalisation est ainsi basée sur le fait que la représentation cepstrale à long terme de ce signal peut être approximée par une constante.
  Pour une description plus détaillée des éléments relatifs à la représentation cepstrale à long terme du signal, en particulier sur les statistiques relatives à cette représentation et sur la possibilité d'identifier le canal de transmission en utilisant le cepstre à long terme, on pourra utilement se reporter à l'article publié par C.MOKBEL, D.JOUVET et J.MONNE précédemment mentionné dans la description.

- Le filtrage adaptatif est appliqué directement dans le domaine cepstral, ce qui bien entendu implique la mise en oeuvre d'un traitement par blocs du signal numérique considéré, ainsi que mentionné précédemment dans la description.

Un justificatif du processus de déconvolution aveugle par filtrage adaptatif, conforme à l'objet de la présente invention, sera maintenant donné ci-après.

En supposant que le signal observé s(k), c'est-à-dire le signal numérique transmis $\{s_n(t)\}$, est le produit de convolution d'un signal propre, c'est-à-dire le produit du signal de parole émis x(k) par le filtre identifiant le canal téléphonique de fonction de transfert w(k), le signal observé s(k) vérifie la relation (1) :

$$s(k) = x(k)*w(k)$$

Dans cette relation, l'opérateur * représente l'opérateur produit de convolution.

▶ Déconvolution dans le domaine spectral

- Afin d'introduire la déconvolution dans le domaine cepstral, un rappel théorique de la déconvolution dans le domaine spectral est tout d'abord introduit.

En référence à la relation (1) précitée, l'expression de la densité spectrale de puissance des deux termes de la relation (1) précitée s'écrit, pour chaque fenêtre ou bloc du signal de parole, selon la relation (2) :

$$S_s(f) = S_x(f)W^2(f)$$

Dans cette relation, $S_s(f)$, $S_x(f)$ représentent respectivement les densités spectrales de puissance du signal observé s(k) et du signal de parole émis x(k), alors que W(f) représente la fonction de transfert du canal téléphonique. On rappelle que W(f) désigne en fait la transformée de Fourier du filtre identifiant le canal téléphonique w(k).

Compte tenu des relations précédentes, un filtre adaptatif de fonction de transfert H(f) peut être directement appliqué sur la densité spectrale de puissance du signal observé $S_s(f)$ afin d'obtenir le spectre égalisé $S_n(f)$ dans lequel l'effet de la ligne téléphonique ou du canal de transmission a été supprimé.

Dans ces conditions, le spectre égalisé $S_n(f)$ vérifie la relation (3) :

$$S_n(f) = S_s(f)H(f) = S_x(f)W^2(f)H(f).$$

A partir d'un spectre plat constant constitutif d'un signal de référence R(f), l'erreur E(f) pour chaque fenêtre du signal observé vérifie la relation (4) :

$$E(f) = R(f) - S_x(f)W^2(f)H(f).$$

Le filtre optimal vers lequel la fonction de transfert H(f) converge est celui qui permet de minimiser l'erreur quadratique moyenne, notée EQM dans chacune des bandes de fréquence f dans laquelle la décomposition en bandes de fréquence, décomposition spectrale, a été réalisée. L'erreur quadratique moyenne EQM(f) vérifie la relation (5) :

$$EQM(f) = E[E^2(f)].$$

Compte tenu de quelques hypothèses largement vérifiées, spectre à long terme du signal de parole constant et fonction de transfert du canal téléphonique W(f) constant sur un large horizon, le filtre optimal est celui qui permet de minimiser l'expression donnée par la relation (6) :

$$EQM(f) = R^2(f) + \overline{S^2_x(f)}W^4(f)H^2(f) - 2R(f)\overline{S_x(f)}W^2(f)H(f)$$

quelle que soit la valeur de f, c'est-à-dire dans l'ensemble des bandes de fréquences dans lequel le signal observé a été décomposé.

La minimisation de l'erreur quadratique moyenne EQM(f) donnée par la relation (6) précédente permet d'obtenir la fonction de transfert du filtre optimal $H_{opt}(f)$, laquelle vérifie la relation (7) :

$$H_{opt}(f) = \frac{R(f)\overline{S_x(f)}}{\overline{S^2_x(f)}} \cdot \frac{1}{W^2(f)} = Cte \frac{1}{W^2(f)}.$$

Le filtre optimal ainsi obtenu permet de compenser l'effet du canal de transmission, c'est-à-dire de la communication téléphonique.

Par ailleurs, si l'on considère un signal de référence R(f) spécifique, c'est-à-dire un signal de référence ayant la même puissance que le signal, l'expression $E[R(f)S_x(f)]$ tend alors à être égale à $E[S_x^2(f)]$ et, dans ces conditions, le filtre optimal approche l'inverse du canal de transmission.

▶ Déconvolution dans le domaine cepstral

Par analogie, dans le domaine cepstral, la relation (3) précédente s'écrit selon la relation (8) :

$$C_n(i) \ = \ C_s(i) + C_H(i) \ = \ C_x(i) + C_w(i) + C_H(i).$$

Dans cette relation, $C_n(i)$, $C_s(i)$, $C_x(i)$, $C_w(i)$ et $C_H(i)$ représentent respectivement le cepstre égalisé, le cepstre du signal observé, le cepstre du signal de parole propre, c'est-à-dire avant transmission par la ligne téléphonique ou le canal de transmission, la représentation cepstrale de l'effet de la ligne et du filtre égalisateur.

Compte tenu de la mise en oeuvre d'un cepstre constant R(i) comme référence, l'erreur E(i) pour chaque fenêtre du signal observé vérifie la relation (9) :

$$E(i) \ = \ R(i) - (C_x(i) + C_w(i) + C_H(i)).$$

Le filtre optimal vers lequel la fonction de transfert H(i) du filtre converge est celui qui permet de minimiser l'erreur quadratique moyenne EQM(i) dans chacune des quéfrences selon la relation (10) :

$$EQM(i) \ = \ E[E^2(i)].$$

Compte tenu de certaines hypothèses semblables aux hypothèses prises en compte dans le domaine fréquentiel, ces hypothèses étant exprimées dans le domaine quéfrentiel, c'est-à-dire cepstre à long terme de parole constant, représentation cepstrale de l'effet de la ligne de transmission constante sur un large horizon, le filtre optimal est celui qui permet de minimiser l'erreur quadratique moyenne et qui en conséquence vérifie la relation (11) :

$$C_{Hopt}(i) \ = \ R(i) - \overline{C_x(i)} - C_w(i) \ = \ Cte - C_w(i).$$

Le filtrage optimal appliqué dans le domaine cepstral permet ainsi de compenser l'effet du canal de transmission.

Lorsqu'on choisit le cepstre de référence R(i) égal à la valeur moyenne du cepstre à long terme, noté $\overline{C_x}(i)$, le filtrage optimal approche alors l'inverse du canal de transmission.

La comparaison de l'approche correspondant au processus d'égalisation aveugle conforme au procédé, objet de la présente invention, avec l'approche classique du filtrage passe-haut ou de la soustraction cepstrale montre en fait que du point de vue des performances de reconnaissance, ce mode opératoire égale sensiblement les performances des solutions de l'art antérieur et les dépasse parfois de manière significative sur certaines bases de données, ainsi qu'il sera décrit de manière plus détaillée ultérieurement dans la description.

En ce qui concerne l'étape 1000 de transformation du signal numérique observé $\{s_n(t)\}$ en un ensemble de vecteurs cepstraux, une description détaillée du processus de transformation proprement dit sera maintenant donnée en liaison avec la figure 2b.

Selon la figure précitée, l'étape de transformation 1000 consiste successivement à soumettre en une étape 1000a le signal de parole numérique $\{s_n(t)\}$ à une transformée fréquentielle délivrant un spectre de fréquences $\{S_n(f)\}$ du signal de parole numérique $\{s_n(t)\}$ sur l'horizon considéré. On rappelle en effet que le signal numérique observé $\{s_n(t)\}$ est subdivisé en blocs successifs d'échantillons afin d'effectuer un traitement par blocs. La transformée fréquentielle utilisée peut par exemple être constituée par une transformée de Fourier rapide.

L'étape 1000a est elle-même suivie d'une étape 1000b consistant à soumettre le spectre de fréquences $\{S_n(f)\}$ obtenu grâce à la transformée fréquentielle mise en oeuvre à l'étape 1000a à une décomposition en sous-bandes de fréquences, pour engendrer une pluralité de signaux en sous-bandes de fréquences notée $\{V_n(j)\}$. On indique que l'indice j désigne ici le rang de chaque sous-bande de fréquences considérée. D'une manière pratique, on indique que la décomposition en sous-bandes de fréquences réalisée à l'étape 1000b peut être mise en oeuvre au moyen d'un banc de filtres de fréquences adapté, le spectre du signal $\{S_n(f)\}$ pouvant par exemple être subdivisé en 24 bandes de fréquences adjacentes.

L'étape 1000b précédemment citée est alors suivie elle-même d'une étape 1000c consistant à soumettre chaque signal en sous-bandes de fréquences, c'est-à-dire chaque signal $V_n(j)$, à une atténuation logarithmique pour engendrer une pluralité de signaux en sous-bandes de fréquences atténués, notés pour cette raison $\{LV_n(j)\}$.

L'ensemble des signaux en sous-bandes de fréquences atténué $\{LV_n(j)\}$ est ensuite soumis à une transformation fréquentielle inverse pour engendrer l'ensemble de vecteurs cepstraux notés $\{C_n(i)\}$. La transformée fréquentielle inverse est par exemple réalisée au moyen d'une transformée de Fourier rapide inverse lorsque la transformée fréquentielle réalisée à l'étape 1000a est réalisée sous forme d'une transformée de Fourier rapide directe.

En ce qui concerne le calcul du cepstre de référence $\{R_n(i)\}$, on indique que, de manière avantageuse, celui-ci peut être constitué par un signal de cepstre de valeur constante pour chacun des vecteurs cepstraux $\{C_n(i)\}$. Ce signal de cepstre constant est représentatif, dans le signal de parole numérique et dans l'ensemble des vecteurs cepstraux, du cepstre à long terme du signal de parole. D'une manière générale, on indique que le cepstre de référence peut être obtenu à partir d'une base de données ainsi qu'il sera décrit ultérieurement dans la description.

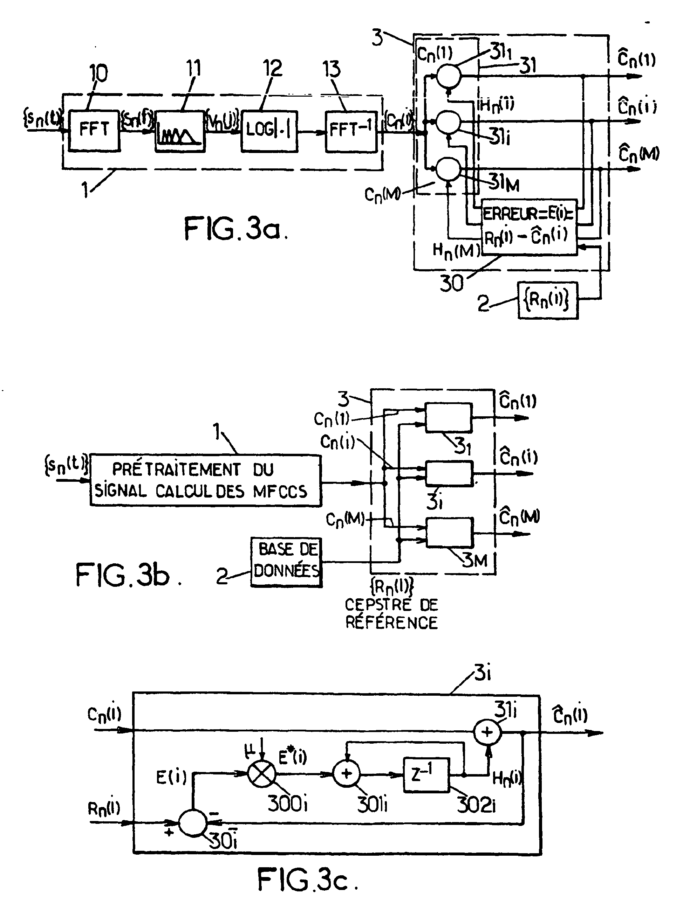

Une description plus détaillée d'un dispositif d'égalisation aveugle des effets d'un canal de transmission sur un signal de parole numérique permettant la mise en oeuvre du procédé, objet de la présente invention, sera maintenant donnée en liaison avec les figures 3a, 3b et 3c.

Ainsi que représenté sur la figure 3a, et pour un signal de parole numérique $\{s_n(t)\}$ transitant dans le cadre d'une communication téléphonique, le dispositif conforme à l'objet de la présente invention comporte au moins un module 1 de transformation du signal de parole numérique $\{s_n(t)\}$ en un ensemble de vecteurs cepstraux $\{C_n(i)\}$ représentatif du signal de parole numérique sur l'horizon déterminé et en particulier pour la fenêtre de rang n du signal numérique de parole observé. Le module 1 précité est suivi d'un module 2 générateur d'un cepstre de référence représentatif pour chacun des vecteurs cepstraux $\{C_n(i)\}$ du cepstre à long terme du signal de parole. Le cepstre de référence permet d'associer à chaque vecteur cepstral $\{C_n(i)\}$ un cepstre de référence $\{R_n(i)\}$ représentatif du cepstre à long terme du signal de parole pour chacun de ces vecteurs, dans des conditions qui seront explicitées ultérieurement dans la description. On comprend ainsi que la valeur du cepstre de référence peut être avantageusement approximée par une constante dans le temps. Toutefois, la distribution $R_n(i)$ de cette valeur pour chaque composante $C_n(i)$ de rang i des vecteurs cepstraux peut être différente en fonction du rang i considéré. Cependant, dans un mode de réalisation particulier non limitatif, le cepstre de référence $\{R_n(i)\}$ avait une valeur constante identique pour chaque composante, ou coefficient cepstral $C_n(i)$ de rang i correspondant, composante constitutive de chaque vecteur cepstral $\{C_n(i)\}$.

Un module 3 de filtrage adaptatif est prévu à partir du cepstre de référence de chacun des vecteurs cepstraux $\{C_n(i)\}$, ce module 3 permettant d'engendrer des vecteurs cepstraux égalisés dans lesquels l'effet de la communication téléphonique est sensiblement supprimé.

On comprend en particulier que le module de filtrage 3 adaptatif permet, à partir du cepstre de référence $\{R_n(i)\}$ représentatif du cepstre à long terme de ce signal de parole pour chacun des vecteurs cepstraux, d'effectuer un filtrage par exemple de type LMS permettant, à partir du calcul d'erreur entre le cepstre de référence $\{R_n(i)\}$ et l'ensemble des vecteurs cepstraux égalisés, d'engendrer des vecteurs cepstraux égalisés $\{\hat{C}_n(i)\}$. L'ensemble des vecteurs cepstraux égalisés est représentatif d'un signal de parole numérique égalisé.

Ainsi qu'on l'a représenté sur la figure 3a, le module 1 de transformation du signal de parole numérique en un ensemble de vecteurs cepstraux comporte au moins, recevant le signal de parole observé $\{s_n(t)\}$, un module 10 de transformée fréquentielle du signal de parole numérique délivrant un spectre de fréquences du signal de parole numérique noté $\{S_n(f)\}$ sur l'horizon considéré, un banc de filtres 11 de décomposition en N sous-bandes de fréquences du spectre de fréquences du signal de parole numérique, ce banc de filtres 11 délivrant N signaux en sous-bandes de fréquences notés $\{V_n(j)\}$.

Le banc de filtres 11 est lui-même suivi d'un module 12 d'atténuation logarithmique de chaque signal en sous-bandes de fréquences, ce module 12 délivrant une pluralité de signaux en sous-bandes de fréquences atténués notés $\{LV_n(j)\}$.

Enfin, le module 1 comporte également un module 13 de transformée fréquentielle inverse recevant les signaux en sous-bandes de fréquences atténués $\{LV_n(j)\}$ permettant d'engendrer, à partir des signaux en sous-bandes de fréquences atténués, l'ensemble de vecteurs cepstraux $\{C_n(i)\}$.

En ce qui concerne le module 2 générateur du cepstre de référence, on indique que, pour un ensemble de vecteurs cepstraux $\{C_n(i)\}$ avec $i \in [1,M]$, le cepstre de référence $\{R_n(i)\}$ est représentatif pour chacun des vecteurs cepstraux du cepstre à long terme du signal de parole. On comprend ainsi que la base de données constitutive du générateur du cepstre de référence 2 peut être organisée de façon à délivrer le cepstre de référence représentatif du cepstre à long terme du signal de parole en fonction de l'indice i désignant la composante du vecteur cepstral $\{C_n(i)\}$.

En outre, ainsi que représenté sur la figure 3a, le module 3 de filtrage adaptatif comporte au moins un module 30 de calcul du signal d'erreur entre chaque vecteur cepstral égalisé $\{\hat{C}_n(i)\}$ correspondant et le cepstre de référence correspondant $\{R_n(i)\}$. Le signal d'erreur $E(i) = R_n(i) - \hat{C}_n(i)$ est calculé entre chaque composante de rang i du cepstre de référence et du vecteur cepstral égalisé. En outre, un module d'égalisation 31 de chaque vecteur cepstral $\{C_n(i)\}$ est prévu, ce module d'égalisation permettant d'engendrer en fait, à partir de chaque composante $C_n(i)$ et de ce signal d'erreur, un vecteur cepstral égalisé $\{\hat{C}_n(i)\}$ correspondant, dans les conditions qui seront explicitées ci-après en liaison avec les figures 3b et 3c. En fait, le signal d'erreur peut être pondéré ou adapté.

Sur la figure 3b, on a représenté le dispositif, objet de la présente invention, dans un mode de réalisation particulier orienté vers une application au système de reconnaissance automatique de la parole PHIL90 précédemment mentionné dans la description.

Bien entendu, les mêmes références désignent les mêmes éléments, le module 1 de la figure 3a étant organisé toutefois de façon à réaliser le calcul des MFCC précédemment désigné dans la description et délivrant en conséquence le vecteur cepstral correspondant $\{C_n(i)\}$ de composantes $C_n(1)$, $C_n(i)$ à $C_n(M)$ pour chaque fenêtre successive du signal numérique de parole observé. Les modules 2 et 3 de la figure 3b représentent des modules semblables à ceux des modules 2 et 3 de la figure 3a. Toutefois, le module de calcul d'erreur entre le cepstre de référence $\{R_n(i)\}$ et chaque vecteur cepstral égalisé $\{\hat{C}_n(i)\}$ est explicité et représenté 3i comme relatif à chaque composante $C_n(i)$ du vecteur cepstral égalisé $\{\hat{C}_n(i)\}$, chaque module 3i étant identique et assurant en fait, pour chaque composante $C_n(i)$ du vecteur cepstral $\{C_n(i)\}$, la même fonction de calcul de l'erreur et d'égalisation de cette composante pour délivrer une composante du vecteur cepstral égalisé correspondant $\{\hat{C}_n(i)\}$.

Ainsi que représenté sur la figure 3c, chaque module 3i comporte avantageusement un circuit soustracteur 30i recevant, d'une part, la composante $R_n(i)$ du cepstre de référence $\{R_n(i)\}$ correspondant sur sa borne positive, ainsi que, d'autre part, le coefficient cepstral égalisé $\hat{C}_n(i)$ sur une borne négative pour assurer le calcul de l'erreur selon un signal d'erreur E(i).

Chaque module 3i reçoit en outre le coefficient cepstral correspondant $C_n(i)$ sur un circuit sommateur 31i, lequel permet en fait de réaliser l'égalisation de ce coefficient cepstral $C_n(i)$ pour délivrer un coefficient cepstral égalisé $\hat{C}_n(i)$.

En outre, ainsi que représenté sur la figure 3c, chaque module 3i, et en particulier le module d'égalisation de chaque coefficient cepstral $C_n(i)$, comprend avantageusement un circuit multiplicateur 300i par un coefficient multiplicateur $\mu$, ce circuit multiplicateur recevant le signal d'erreur E(i) délivré par le circuit soustracteur 30i et délivrant un signal d'erreur pondéré E*(i). Le circuit multiplicateur 300i est suivi par un circuit sommateur 301i à deux entrées et une sortie, une première entrée du premier circuit sommateur 301i recevant le signal d'erreur pondéré E*(i) et une deuxième entrée de ce circuit sommateur recevant le signal délivré par ce dernier, par l'intermédiaire d'un circuit retardateur 302i. Le circuit retardateur 302i introduit en fait un retard égal à la durée d'un bloc d'échantillons de signal numérique. La sortie du circuit retardateur 302i délivre un signal d'adaptation $H_n(i)$, lequel est envoyé sur le circuit sommateur d'égalisation 31i. Le circuit d'adaptation ainsi constitué par le circuit multiplicateur 300i, le circuit sommateur 301i et le circuit retardateur 302i, permet ainsi d'adapter ou pondérer le signal d'erreur E(i) pour délivrer le signal d'adaptation $H_n(i)$. Sur adaptation du signal d'erreur réalisée par le circuit d'adaptation, le circuit sommateur d'égalisation 31i délivre alors le coefficient cepstral égalisé $\hat{C}_n(i)$ correspondant. Ainsi qu'on l'observera sur la figure 3b, il en est de même pour toutes les composantes des vecteurs cepstraux de rang i compris entre 1 et M du mode de réalisation considéré.

Le dispositif, objet de la présente invention, tel que représenté en figures 3b et 3c, a été mis en oeuvre et des essais comparatifs ont permis de tester la technique d'égalisation aveugle proposée sur diverses bases de données spécifiques.

Les essais ont été réalisés en prenant en entrée un fichier de 10 coefficients cepstraux, application du filtrage adaptatif et sauvegarde des vecteurs MFCC en sortie du filtre ainsi obtenus. Les fichiers MFCC sont directement utilisés par le système PHIL90.

Le tableau ci-après présente les améliorations obtenues par rapport à une technique classique, désignée par système de base, un processus de soustraction cepstrale tel que défini par exemple dans l'art antérieur par C.MOKBEL, J.MONNE et D.JOUVET précédemment cité dans la description, un filtrage adaptatif dans le domaine spectral tel que réalisé par exemple conformément au procédé et au système décrits dans la demande de brevet français n° 94 08741 précédemment citée dans la description, et enfin un filtrage adaptatif dans le domaine cepstral conformément au procédé et au dispositif, objets de la présente invention.

Ces techniques sont appliquées sur quatre bases de données différentes, désignées dans le tableau précité, successivement par **Chiffres,** **Nombres à deux chiffres,** **Trégor** et **Baladins.**

Les trois premières bases de données sont des bases de données dites de laboratoire dont les enregistrements sont ceux de locuteurs prévenus et coopératifs.

La dernière base de données, **Baladins,** est une base de données dite d'exploitation obtenue en enregistrant les appels à un serveur en exploitation. Les conditions d'enregistrement des bases de données d'exploitation sont plus proches des conditions réelles d'exploitation. Les résultats de reconnaissance sur ces bases de données sont donc plus conformes aux performances obtenues en exploitation. Les améliorations, dernière colonne du tableau, indiquées comme Réduction du taux d'erreur, sont données par rapport à la version de référence du système PHIL90. La fourchette indiquée entre crochets à côté du taux d'erreur du système de base représente l'intervalle de confiance à 95%.

En ce qui concerne le processus de soustraction cepstrale, ce processus apparaît performant au moins pour les bases de données **Chiffres** et **Nombres à deux chiffres.** Toutefois, la mise en oeuvre de ce processus pose un problème d'implantation en ligne en temps réel car cette implantation se base sur l'estimation de la moyenne des vecteurs cepstraux dans le silence ou sur un large horizon de parole.

| Chiffres | Taux d'erreur | Réduction du taux d'erreur |
|---|---|---|
| Système de base | 0,63% [0,44-0,90] | |
| Soustraction cepstrale | 0,40% | 36,7% |
| Filtrage adaptatif (domaine spectral) | 0,52% | 16,7% |
| Filtrage adaptatif (domaine cepstral) | 0,46% | 26,7% |
| **Nombres à deux chiffres** | **Taux d'erreur** | **Réduction du taux d'erreur** |
| Système de base | 3,2% [2,82-3,63] | |
| Soustraction cepstrale | 2,5% | 21,1% |
| Filtrage adaptatif (domaine spectral) | 2,6% | 18,5% |
| Filtrage adaptatif (domaine cepstral) | 2,5% | 21,1% |
| **Trégor** | **Taux d'erreur** | **Réduction du taux d'erreur** |
| Système de base | 0,40% [0,30-0,53] | |
| Soustraction cepstrale | 0,34% | 13,7% |
| Filtrage adaptatif (domaine spectral) | 0,33% | 17,6% |
| Filtrage adaptatif (domaine cepstral) | 0,26% | 35,3% |
| **Baladins** | **Taux d'erreur** | **Réduction du taux d'erreur** |
| Système de base | 3,8% [2,44-3,68] | |
| Soustraction cepstrale | 3,2% | 12,7% |
| Filtrage adaptatif (domaine spectral) | 3% | 19,1% |
| Filtrage adaptatif (domaine cepstral) | 2,7% | 29,1% |

En ce qui concerne la réalisation effective du dispositif, objet de la présente invention, on indique que celui-ci peut bien entendu utiliser des structures déjà mises en oeuvre dans le cadre du système PHIL90 précédemment mentionné dans la description.

Le dispositif d'égalisation, conforme à l'objet de la présente invention, appliqué dans l'espace des coefficients cepstraux, est très peu coûteux en temps de calcul. En effet, il demande pour chaque vecteur de paramètres, chaque 16 ms, M multiplications et 3M additions où M désigne bien entendu le nombre de coefficients cepstraux. Le nombre d'opérations nécessaires apparaît donc égal à une multiplication et trois additions par sortie de filtre. Ce coût de calcul est sensiblement négligeable par rapport au volume de calcul mis en jeu lors de la détermination des vecteurs de paramètres.

Compte tenu de ces indications, on indique que le coût de calcul du filtre mis en oeuvre est faible et que l'implantation de ce dernier ne pose donc pas de problème de calcul en temps réel.

Par rapport à la solution proposée par la demande de brevet français n° 94 08741, le coût en volume de calcul se trouve réduit car il n'y a qu'une multiplication et trois additions par sortie de filtre, au lieu de trois multiplications et deux additions dans la solution précédemment mentionnée, alors qu'en outre, le filtre, dans le domaine cepstral, comporte moins de sorties que dans le domaine spectral. En outre, la dynamique des coefficients cepstraux étant plus faible que celle des coefficients spectraux et des vecteurs correspondants, la précision en nombre de bits alloués aux variables précitées demandée sur les calculs est donc moins importante. Les résultats obtenus sont équivalents ou légèrement supérieurs ; c'est en particulier le cas pour les bases de données mentionnées dans le tableau précité vis-à-vis de la technique retenue dans la demande de brevet n° 94 08741 précédemment citée.

**Revendications**

1. procédé d'égalisation aveugle des effets d'un canal de transmission sur un signal de parole numérique ($\{S_n(t)\}$) transitant sur ce canal de transmission, dans lequel on soumet ledit signal de parole numérique à une transformation en un ensemble de vecteurs cepstraux, l'ensemble de vecteurs cepstraux étant représentatif dudit signal de parole numérique sur un horizon déterminé, un horizon déterminé étant défini comme un nombre entier de fenêtres successives appliquées audit signal de parole numérique, **caractérisé en ce que** ledit procédé consiste en outre :

- à calculer un cepstre de référence ($\{R_n(i)\}$) représentatif, pour chacun des vecteurs cepstraux dudit ensemble de vecteurs cepstraux, du cepstre à long terme de ce signal de parole ;
- à soumettre chacun des vecteurs cepstraux à un filtrage adaptatif, à partir dudit cepstre de référence, pour engendrer un ensemble de vecteurs cepstraux égalisés ($\{\hat{C}_n(i)\}$) dans lesquels l'effet du canal de transmission est sensiblement supprimé, ledit ensemble de vecteurs cepstraux égalisés étant représentatif d'un signal de parole numérique égalisé.

2. Procédé selon la revendication 1, **caractérisé en ce que** ladite transformation consiste successivement :

- à soumettre ledit signal de parole numérique ($\{S_n(t)\}$) à une transformée fréquentielle délivrant un spectre de fréquences ($\{S_n(f)\}$) dudit signal de parole numérique ($\{S_n(t)\}$) sur l'horizon considéré ;
- à soumettre ledit spectre de fréquences ($\{S_n(f)\}$) à une décomposition en sous-bandes de fréquences pour engendrer une pluralité de signaux en sous-bandes de fréquences ($\{V_n(j)\}$);
- à soumettre chaque signal en sous-bandes de fréquences à une atténuation logarithmique pour engendrer une pluralité de signaux en sous-bandes de fréquences atténués ($\{LV_n(j)\}$) ;
- à soumettre l'ensemble des signaux en sous-bandes de fréquences atténué à une transformation fréquentielle inverse pour engendrer ledit ensemble de vecteurs cepstraux ($\{C_n(i)\}$).

3. Procédé selon la revendication 1 ou 2, **caractérisé en ce que** le cepstre de référence ($\{R_n(i)\}$) est constitué par un signal de cepstre constant pour chacun des vecteurs cepstraux, représentatif, dans le signal de parole numérique et dans l'ensemble des vecteurs cepstraux, du cepstre à long terme du signal de parole.

4. Procédé selon la revendication 3, **caractérisé en ce que** le cepstre de référence ($\{R_n(i)\}$) a une valeur constante identique pour chaque composante, ou coefficient cepstral ($C_n(i)$) de rang i correspondant, constitutif de chaque vecteur cepstral ($\{C_n(i)\}$).

5. Procédé selon l'une des revendications 1 à 4, **caractérisé en ce que** ledit filtrage adaptatif consiste, pour chacun des vecteurs cepstraux à partir dudit cepstre de référence ($\{R_n(i)\}$) représentatif du cepstre à long terme de ce signal de parole, pour chacun des vecteurs cepstraux, à effectuer un filtrage de type LMS, ledit filtrage de type LMS permettant, à partir du calcul d'erreur entre ledit cepstre de référence ($\{R_n(i)\}$) et l'ensemble desdits vecteurs cepstraux égalisés, d'engendrer lesdits vecteurs cepstraux égalisés.

6. Dispositif d'égalisation aveugle des effets d'un canal de transmission sur un signal de parole numérique ($\{S_n(t)\}$) transitant sur ce canal de transmission comprenant des moyens de transformation du signal de parole numérique en un ensemble de vecteurs cepstraux, l'ensemble de vecteurs cepstraux étant représentatif dudit signal de parole numérique sur un horizon déterminé, un horizon déterminé étant défini comme un nombre entier de fenêtres successives appliquées audit signal de parole numérique, **caractérisé en ce que** celui-ci comprend au moins :

- des moyens générateurs d'un cepstre de référence, représentatif, pour chacun des vecteurs cepstraux dudit ensemble de vecteurs cepstraux, du cepstre à long terme de ce signal de parole ;
- des moyens de filtrage adaptatif, à partir dudit cepstre de référence, de chacun des vecteurs cepstraux permettant d'engendrer des vecteurs cepstraux égalisés dans lesquels l'effet dudit canal de transmission est sensiblement supprimé, ledit ensemble de vecteurs cepstraux égalisés étant représentatif d'un signal de parole numérique égalisé.

7. Dispositif selon la revendication 6, **caractérisé en ce que** lesdits moyens de transformation dudit signal de parole numérique en un ensemble de vecteurs cepstraux comportent au moins :

- des moyens de transformée fréquentielle dudit signal de parole numérique, délivrant un spectre de fréquences dudit signal de parole numérique ($\{S_n(t)\}$) sur l'horizon considéré ;
- un banc de filtres de décomposition en N sous-bandes de fréquences dudit spectre de fréquences dudit signal de parole numérique délivrant N signaux en sous-bandes de fréquences ($\{V_n(j)\}$) ;
- des moyens d'atténuation logarithmique de chaque signal en sous-bandes de fréquences délivrant une pluralité de signaux en sous-bandes de fréquences atténués ($\{LV_n(j)\}$);

- des moyens de transformée fréquentielle inverse permettant d'engendrer, à partir desdits signaux en sous-bandes de fréquences atténués ($\{LV_n(j)\}$), ledit ensemble de vecteurs cepstraux ($\{C_n(i)\}$).

8. Dispositif selon l'une des revendications 6 ou 7, **caractérisé en ce que**, pour chaque vecteur cepstral ($\{C_n(i)\}$), $i \in [1, M]$ et pour un cepstre de référence ($\{R_n(i)\}$) représentatif, pour chacun des vecteurs cepstraux, du cepstre à long terme de ce signal de parole, lesdits moyens de filtrage adaptatif comportent au moins :

   - des moyens de calcul d'un signal d'erreur, E(i), entre chaque composante de rang i, $\hat{C}_n(i)$, de chaque vecteur cepstral égalisé $\{\hat{C}_n(i)\}$ et la composante correspondante de même rang, $R_n(i)$, du cepstre de référence $\{R_n(i)\}$,

$$E(i) = R_n(i) - \hat{C}_n(i),$$

   et
   - des moyens d'égalisation dudit vecteur cepstral ($\{C_n(i)\}$) délivrant à partir de chaque composante ($C_n(i)$) de chaque vecteur cepstral ($\{C_n(i)\}$) et dudit signal d'erreur (E(i)) une composante ($\hat{C}_n(i)$) du vecteur cepstral égalisé ($\{\hat{C}_n(i)\}$).

9. Dispositif selon la revendication 8, **caractérisé en ce que** lesdits moyens de calcul du signal d'erreur (E(i)) et lesdits moyens d'égalisation dudit vecteur cepstral ($\{C_n(i)\}$) comprennent, pour chaque composante ($C_n(i)$) dudit vecteur cepstral,

   - un circuit soustracteur recevant ladite composante ($R_n(i)$) du cepstre de référence ($\{R_n(i)\}$) et ladite composante ($\hat{C}_n(i)$) dudit vecteur cepstral égalisé ($\{\hat{C}_n(i)\}$) et délivrant ledit signal d'erreur (E(i)) ;
   - des moyens d'adaptation de ce signal d'erreur (E(i)) comportant :

      • un circuit multiplicateur par un coefficient multiplicateur $\mu$ délivrant un signal d'erreur pondéré (E*(i)) ;
      • un circuit sommateur à deux entrées et une sortie, une première entrée recevant ledit signal d'erreur pondéré (E*(i)) et une deuxième entrée recevant le signal délivré par ledit premier circuit sommateur par l'intermédiaire d'un circuit retardateur d'une durée déterminée, la sortie dudit circuit retardateur délivrant un signal d'adaptation ($H_n(i)$);

   - un circuit sommateur d'égalisation recevant ledit coefficient cepstral ($C_n(i)$) et ledit signal d'adaptation ($H_n(i)$) et délivrant ledit coefficient cepstral égalisé ($C_n(i)$).

**Claims**

1. Method of blind equalization of the effects of a transmission channel on a digital speech signal ($\{S_n(t)\}$) travelling over this transmission channel, in which the said digital speech signal is subjected to a transformation into a set of cepstral vectors, the set of cepstral vectors being representative of the said digital speech signal over a determined horizon, a determined horizon being defined as an integer number of successive windows applied to the said digital speech signal, **characterized in that** the said method furthermore consists:

   - in calculating a reference cepstrum ($\{R_n(i)\}$) representative, for each of the cepstral vectors of the said set of cepstral vectors, of the long-term cepstrum of this speech signal;
   - in subjecting each of the cepstral vectors to an adaptive filtering, on the basis of the said reference cepstrum, so as to generate a set of equalized cepstral vectors ($\{\hat{C}_n(i)\}$) in which the effect of the transmission channel is substantially removed, the said set of equalized cepstral vectors being representative of an equalized digital speech signal.

2. Method according to Claim 1, **characterized in that** the said transformation consists successively:

   - in subjecting the said digital speech signal ($\{S_n(t)\}$) to a frequency transform delivering a frequency spectrum ($\{S_n(f)\}$) of the said digital speech signal ($\{S_n(t)\}$) over the horizon considered;
   - in subjecting the said frequency spectrum ($\{S_n(f)\}$) to a decomposition into frequency sub-bands so as to generate a plurality of frequency sub-band signals ($\{V_n(j)\}$);

- in subjecting each frequency sub-band signal to a logarithmic attenuation so as to generate a plurality of attenuated frequency sub-band signals ($\{LV_n(j)\}$);
- in subjecting the set of attenuated frequency sub-band signals to an inverse frequency transformation so as to generate the said set of cepstral vectors ($\{C_n(i)\}$).

3. Method according to Claim 1 or 2, **characterized in that** the reference cepstrum ($\{R_n(i)\}$) consists of a signal of constant cepstrum for each of the cepstral vectors, representative, in the digital speech signal and in the set of cepstral vectors, of the long-term cepstrum of the speech signal.

4. Method according to Claim 3, **characterized in that** the reference cepstrum ($\{R_n(i)\}$) has an identical constant value for each component, or constituent cepstral coefficient ($C_n(i)$) of corresponding rank i of each cepstral vector ($\{C_n(i)\}$).

5. Method according to one of Claims 1 to 4, **characterized in that** the said adaptive filtering consists, for each of the cepstral vectors on the basis of the said reference cepstrum ($\{R_n(i)\}$) representative of the long-term cepstrum of this speech signal, for each of the cepstral vectors, in performing a filtering of LMS type, the said filtering of LMS type making it possible, on the basis of the calculation of the error between the said reference cepstrum ($\{R_n(i)\}$) and the set of said equalized cepstral vectors, to generate the said equalized cepstral vectors.

6. Device for blind equalization of the effects of a transmission channel on a digital speech signal ($\{S_n(t)\}$) travelling over this transmission channel, comprising means for transforming the digital speech signal into a set of cepstral vectors, the set of cepstral vectors being representative of the said digital speech signal over a determined horizon, a determined horizon being defined as an integer number of successive windows applied to the said digital speech signal, **characterized in that** it comprises at least:

- means for generating a reference cepstrum, representative, for each of the cepstral vectors of the said set of cepstral vectors, of the long-term cepstrum of this speech signal;
- means for adaptively filtering, on the basis of the said cepstrum of reference, each of the cepstral vectors making it possible to generate equalized cepstral vectors in which the effect of the said transmission channel is substantially removed, the said set of equalized cepstral vectors being representative of an equalized digital speech signal.

7. Device according to Claim 6, **characterized in that** the said means for transforming the said digital speech signal into a set of cepstral vectors comprise at least:

- means for frequency transforming the said digital speech signal, delivering a frequency spectrum of the said digital speech signal ($\{S_n(t)\}$) over the horizon considered;
- a bank of filters for decomposing the said frequency spectrum of the said digital speech signal into N frequency sub-bands, delivering N frequency sub-band signals ($\{V_n(j)\}$);
- means for logarithmically attenuating each frequency sub-band signal, delivering a plurality of attenuated frequency sub-band signals ($\{LV_n(j)\}$);
- means of inverse frequency transform making it possible to generate, on the basis of the said attenuated frequency sub-band signals ($\{LV_n(j)\}$), the said set of cepstral vectors ($\{C_n(i)\}$).

8. Device according to one of Claims 6 or 7, **characterized in that**, for each cepstral vector ($\{C_n(i)\}$), $i \in [1,M]$ and for a reference cepstrum ($\{R_n(i)\}$) representative, for each of the cepstral vectors, of the long-term cepstrum of this speech signal, the said adaptive filtering means comprise at least:

- means for calculating a signal E(i) of the error between each component of rank i, $\hat{C}_n(i)$, of each equalized cepstral vector $\{\hat{C}_n(i)\}$ and the corresponding component of the same rank, $R_n(i)$, of the reference cepstrum $\{R_n(i)\}$,

$$E(i) = R_n(i) - \hat{C}_n(i),$$

and
- means for equalizing the said cepstral vector ($\{C_n(i)\}$), delivering on the basis of each component ($C_n(i)$) of each cepstral vector ($\{C_n(i)\}$) and of the said error signal (E(i)), a component ($\hat{C}_n(i)$) of the equalized cepstral

vector ($\{\hat{C}_n(i)\}$).

9. Device according to Claim 8, **characterized in that** the said means for calculating the error signal (E(i)) and the said means for equalizing the said cepstral vector ($\{C_n(i)\}$) comprise, for each component ($C_n(i)$) of the said cepstral vector,

   - a subtractor circuit receiving the said component ($R_n(i)$) of the reference cepstrum ($\{R_n(i)\}$) and the said component ($\hat{C}_n(i)$) of the said equalized cepstral vector ($\{\hat{C}_n(i)\}$) and delivering the said error signal (E(i));
   - means for adaptating this error signal (E(i)) comprising:

     • a multiplier circuit for multiplying by a multiplier coefficient $\mu$ delivering a weighted error signal (E*(i));
     • a summator circuit with two inputs and one output, a first input receiving the said weighted error signal (E*(i)) and a second input receiving the signal delivered by the said first summator circuit by way of a delaying circuit for retarding by a determined duration, the output of the said delaying circuit delivering an adaptation signal ($H_n(i)$);

   - an equalizing summator circuit receiving the said cepstral coefficient ($C_n(i)$) and the said adaptation signal ($H_n(i)$) and delivering the said equalized cepstral coefficient ($\hat{C}_n(i)$).

## Patentansprüche

1. Verfahren zum blinden Ausgleich der Effekte eines Übertragungskanals auf ein digitales Sprachsignal ($\{S_n(t)\}$), das auf diesem Übertragungskanal läuft, bei dem man das digitale Sprachsignal einer Umformung in eine Einheit Cepstralvektoren unterwirft, wobei die Einheit Cepstralvektoren für das digitale Sprachsignal auf einem bestimmten Horizont repräsentativ ist, wobei ein bestimmter Horizont als eine Ganzzahl aufeinander folgender Fenster, die an das digitale Sprachsignal angewandt werden, definiert ist, **dadurch gekennzeichnet, dass** das Verfahren ferner aus Folgendem besteht:

   - Berechnen eines repräsentativen Referenzcepstrums ($\{R_n(i)\}$) für jeden der Cepstralvektoren der Einheit Cepstralvektoren, des langfristigen Cepstrums dieses Sprachsignals,
   - jeden der Cepstralvektoren einem anpassenden Filtern ausgehend von dem Referenzcepstrum unterziehen, um eine Einheit ausgeglichener Cepstralvektoren ($\{\hat{C}_n(i)\}$) zu erzeugen, in welchen der Effekt des Übertragungskanals im Wesentlichen eliminiert ist, wobei die Einheit ausgeglichener Cepstralvektoren für ein ausgeglichenes digitales Sprachsignal repräsentativ ist.

2. Verfahren nach Anspruch 1, **dadurch gekennzeichnet, dass** die Umformung nacheinander aus Folgendem besteht:

   - das digitale Sprachsignal ($\{S_n(t)\}$) einer Frequenztransformation unterwerfen, die ein Frequenzspektrum ($\{S_n(f)\}$) des digitalen Sprachsignals ($\{S_n(t)\}$) auf dem betreffenden Horizont liefert,
   - das Frequenzspektrum ($\{S_n(f)\}$) einer Aufschlüsselung in Frequenzunterbänder unterziehen, um mehrere Signale in Frequenzunterbändern ($\{V_n(j)\}$) zu erzeugen,
   - jedes Signal in Frequenzunterbändern einer logarithmischen Dämpfung unterziehen, um mehrere gedämpfte Signale in Frequenzunterbändern ($\{LV_n(j)\}$) zu erzeugen,
   - die gedämpfte Einheit der Signale in Frequenzunterbändern einer umgekehrten Frequenzumwandlung unterziehen, um die Einheit Cepstralvektoren ($\{C_n(i)\}$) zu erzeugen.

3. Verfahren nach Anspruch 1 oder 2, **dadurch gekennzeichnet, dass** das Referenzcepstrum ($\{R_n(i)\}$) aus einem konstanten Cepstrumsignal für jeden der Cepstralvektoren besteht, das für das langfristige Cepstrum des Sprachsignals in dem digitalen Sprachsignal und in der Einheit der Cepstralvektoren repräsentativ ist.

4. Verfahren nach Anspruch 3, **dadurch gekennzeichnet, dass** das Referenzcepstrum ($\{R_n(i)\}$) einen für jede Komponente oder jeden Cepstralkoeffizienten ($C_n(i)$) des entsprechenden Rangs i identischen konstanten Wert hat, der jeden Cepstralvektor ($\{C_n(i)\}$) bildet.

5. Verfahren nach einem der Ansprüche 1 bis 4, **dadurch gekennzeichnet, dass** das anpassende Filtern darin besteht, für jeden der Cepstralvektoren ausgehend von dem Referenzcepstrum ($\{R_n(i)\}$), das für das langfristige

EP 0 932 964 B1

Cepstrum dieses Sprachsignals repräsentativ ist, für jeden der Cepstralvektoren ein Filter des Typs LMS durchzuführen, wobei es das LMS-Filtern ausgehend von der Fehlerberechnung zwischen dem Referenzcepstrum ($\{R_n(i)\}$) und der Einheit der ausgeglichenen Cepstralvektoren erlaubt, die ausgeglichenen Cepstralvektoren zu erzeugen.

6. Vorrichtung zum blinden Ausgleich der Effekte eines Übertragungskanals auf ein digitales Sprachsignal ($\{S_n(t)\}$), das auf diesem Übertragungskanal läuft, die Mittel zum Umformen des digitalen Sprachsignals in eine Einheit Cepstralvektoren aufweist, wobei die Einheit Cepstralvektoren für das digitale Sprachsignal auf einem bestimmten Horizont repräsentativ ist, wobei der bestimmte Horizont als eine Ganzzahl aufeinander folgender Fenster definiert ist, die an das digitale Sprachsignal angewandt werden, **dadurch gekennzeichnet, dass** sie mindestens Folgendes aufweist:

   - Erzeugungsmittel eines Referenzcepstrums, das für jeden der Cepstralvektoren der Einheit Cepstralvektoren für das langfristige Cepstrum dieses Sprachsignals repräsentativ ist,
   - Mittel zum anpassenden Filtern ausgehend vom Referenzcepstrum jedes der Cepstralvektoren, die es erlauben, ausgeglichene Cepstralvektoren zu erzeugen, in welchen der Effekt des Übertragungskanals im Wesentlichen eliminiert ist, wobei die Einheit ausgeglichener Cepstralvektoren für ein ausgeglichenes digitales Sprachsignal repräsentativ ist.

7. Vorrichtung nach Anspruch 6, **dadurch gekennzeichnet, dass** die Umformungsmittel des digitalen Sprachsignals in eine Einheit von Cepstralvektoren mindestens Folgendes aufweisen:

   - Mittel zur Frequenzumformung des digitalen Sprachsignals, die ein Frequenzspektrum des digitalen Sprachsignals ($\{S_n(t)\}$) auf dem betreffenden Horizont liefern,
   - eine Filterbank zum Aufschlüsseln des Frequenzspektrums des digitalen Sprachsignals in N Frequenzunterbänder, die N Signale in Frequenzunterbändern ($\{V_n(j)\}$) liefert,
   - Mittel zum logarithmischen Dämpfen jedes Signals in Frequenzunterbändern, die mehrere gedämpfte Signale in Frequenzunterbändern ($\{LV_n(j)\}$) liefern,
   - Mittel zur umgekehrten Frequenztransformation, die es erlauben, ausgehend von den gedämpften Signalen in Frequenzunterbändern ($\{LV_n(j)\}$) die Einheit von Cepstralvektoren ($\{C_n(i)\}$) zu erzeugen.

8. Vorrichtung nach einem der Ansprüche 6 oder 7, **dadurch gekennzeichnet, dass** die Mittel zum anpassenden Filtern für jeden Cepstralvektor ($\{C_n(i)\}$), $i \in [1, M]$, und für ein repräsentatives Referenzcepstrum ($\{R_n(i)\}$) für jeden der Cepstralvektoren des langfristigen Cepstrums dieses Sprachsignals mindestens Folgendes aufweisen:

   - Mittel zum Berechnen eines Fehlersignals, E(i), zwischen jeder Komponente mit Rang i, $\hat{C}_n(i)$, jedes ausgeglichenen Cepstralvektors $\{\hat{C}_n(i)\}$ und der entsprechenden Komponente gleichen Rangs, $R_n(i)$ des Referenzcepstrums $\{R_n(i)\}$,

$$\mathtt{E(i)\ =\ R_n(i)\ -\ \hat{C}_n(i)}$$

   und
   - Mittel zum Ausgleichen des Cepstralvektors ($\{C_n(i)\}$), die ausgehend von jeder Komponente ($C_n(i)$) jedes Cepstralvektors ($\{C_n(i)\}$) und dem Fehlersignal (E(i)) eine Komponente ($\hat{C}_n(i)$) des ausgeglichenen Cepstralvektors ($\{\hat{C}_n(i)\}$) liefern.

9. Vorrichtung nach Anspruch 8, **dadurch gekennzeichnet, dass** die Mittel zum Berechnen des Fehlersignals (E(i)) und die Mittel zum Ausgleichen des Cepstralvektors ($\{C_n(i)\}$) für jede Komponente ($C_n(i)$) des Cepstralvektors Folgendes aufweisen:

   - eine Subtrahierschaltung, die die Komponente ($R_n(i)$) des Referenzcepstrums ($\{R_n(i)\}$) und die Komponente ($\hat{C}_n(i)$) des ausgeglichenen Cepstralvektors ($\{\hat{C}_n(i)\}$) empfängt und das Fehlersignal (E(i)) liefert,
   - Mittel zum Anpassen dieses Fehlersignals (E(i)), die Folgendes aufweisen:

     • eine Multiplizierschaltung mit einem Multiplikationsfaktor $\mu$, die ein gewichtetes Fehlersignal (E*(i)) liefert,
     • eine Summierschaltung mit zwei Eingängen und einem Ausgang, wobei ein erster Eingang das gewichtete Fehlersignal (E*(i)) empfängt und ein zweiter Eingang das Signal empfängt, das von der ersten Summierschaltung über eine Verzögerungsschaltung mit einer bestimmten Dauer geliefert wird, wobei der Ausgang der Verzögerungsschaltung ein Anpassungssignal ($H_n(i)$) liefert,

- eine Ausgleichssummierschaltung, die den Cepstralkoeffizienten ($C_n(i)$) und das Anpassungssignal ($H_n(i)$) empfängt und den ausgeglichenen Cepstralkoeffizienten ($\hat{C}_n(i)$) liefert.

SIGNAL → FFT → LOG|.|² → FFT INVERSE → {$c_n^{(i)}$} CEPSTRE

## FIG.1a. (ART ANTÉRIEUR)
CALCUL DU CEPSTRE

SIGNAL → FFT → FILTRES MEL → LOG|.| → FFT INVERSE → MFCC

## FIG.1b. (ART ANTÉRIEUR)
CALCUL DES MFCC

BRUIT ADDITIF
$b(n)$

$s(n)$ → CANAL DE TRANSMISSION S → ⊕ → $x(n)$ → FILTRE ADAPTATIF H → $y(n)$ → DÉCISION ET STATISTIQUES À LONG TERME → $\hat{s}(n)$

## FIG.1c. (ART ANTÉRIEUR)
ÉGALISEUR AUTODIDACTE (AVEUGLE) UTILISÉ EN TRANSMISSION NUMÉRIQUE

$\{s_n(t)\}$

```
┌─────────────────────────┐
│   TRANSFORMATION        │──── 1000
│   VECTEURS CEPSTRAUX    │
│   {Cₙ(i)}               │
└─────────────────────────┘
```

## FIG.2a.

$\{C_n(i)\}$

```
┌─────────────────────────┐
│   CALCUL  CEPSTRE       │──── 1001
│   DE  RÉFÉRENCE         │
│   {Rₙ(i)}               │
└─────────────────────────┘
```

$\{R_n(i)\}$      $\{C_n(i)\}$

```
┌─────────────────────────┐
│   FILTRAGE ADAPTATIF    │──── 1002
│   {Cₙ(i)} {Rₙ(i)}       │
└─────────────────────────┘
```

$(\widehat{C_n(i)})$

$\{s_n(t)\}$

```
┌─────────────────────────────────────────┐
│  ┌─────────────────────┐                 │──── 1000
│  │  TRANSFORMÉE        │──── 1000a       │
│  │  FRÉQUENTIELLE      │                 │
│  └─────────────────────┘                 │
│         {Sₙ(f)}                          │
│  ┌─────────────────────┐                 │
│  │  DÉCOMPOSITION      │──── 1000b       │
│  │  EN SOUS-BANDES     │                 │      FIG.2b.
│  └─────────────────────┘                 │
│         {Vₙ(j)}                          │
│  ┌─────────────────────┐                 │
│  │  ATTÉNUATION        │──── 1000c       │
│  │  LOG                │                 │
│  └─────────────────────┘                 │
│         {LVₙ(j)}                         │
│  ┌─────────────────────┐                 │
│  │  TRANSFORMÉE        │──── 1000d       │
│  │  FRÉQUENTIELLE      │                 │
│  │  INVERSE            │                 │
│  └─────────────────────┘                 │
└─────────────────────────────────────────┘
```

$\{C_n(i)\}$

FIG.3a.

FIG.3b.

FIG.3c.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 9408741

- EP 0720149 A

**Littérature non-brevet citée dans la description**

- **H.HERMANSKY ; N.MORGAN ; A.BAYYA ; P.KOHN.** Compensation for the Effect of the Communication Channel in Auditory-like Analysis of Speech. *Eurospeech,* 1991, 1367-1370
- **C.MOKBEL ; D.JOUVET ; J.MONNE.** Deconvolution of Telephone Line Effects for Speech Recognition. *Speech Communication,* 03 Septembre 1996, vol. 19, 185-196

- **A.BENVENISTE ; M.GOURSAT.** Blind Equalizers. *IEEE Transactions on Communications,* Août 1984, vol. 32 (8), 871-883
- **B. WIDROW.** daptive Noise Cancelling : Principles and Applications. *Proc. of IEEE,* Décembre 1975, vol. 63 (12), 1692-1716
- **J.J.SHYNK.** Frequency-Domain and Multiratet Adaptive Filtering. *IEEE Signal Processing Magazine,* Janvier 1992, 15-37